# FASCICULE DE BREVET EUROPEEN

(11) **EP 1 142 760 B1**
(45) Date de publication et mention de la délivrance du brevet: **02.01.2004**
(21) Numéro de dépôt: 00810289.9
(22) Date de dépôt: 04.04.2000
(51) Int. Cl.: B60R 9/04, B60R 9/045, B60R 9/058

(54) **Barre destinée à être serrée de façon détachable sur le toit d'un vehicile automobile**
Zur lösbaren Befestigung auf dem Dach eines Automobils bestimmten Stange
Bar intended to be clamped removably on the roof of a motor vehicle

(43) Date de publication de la demande: 10.10.2001
(73) Titulaire: SCAMBIA INDUSTRIAL DEVELOPMENTS AKTIENGESELLSCHAFT, 9494 Schaan (LI)
(72) Inventeur: Poulet, Serge, 77170 Brie Comte Robert (FR)
(74) Mandataire: Eder, Carl E.

(56) Documents cités:
- EP-A- 0 894 672
- GB-A- 2 122 154
- US-A- 4 101 061

## Description

L'invention concerne une barre à être serrée de façon détachable sur le toit d'un véhicule automobile.

La barre peut former un part d'un porte-charge qui possède normalement encore au moins une autre barre égale ou similaire. La barre peut être arrangée sur le toit d'un véhicule dans une direction transversale par rapport au véhicule automobile.

Des porte-charges connus comportent des barres dont chacune a un secteur central et/ou principal ainsi que deux éléments de serrage arrangés aux extrémités dudit secteur. Les éléments de serrage sont courbes et/ou coudés et pourvus de crochets qui peuvent être accrochés au toit du véhicule. L'un des deux éléments de serrage est déplaçable par rapport au secteur central à l'aide de moyens de réglage. L'autre élément de serrage est fixé de façon immobile au secteur central de la barre. Les moyens de réglage comportent deux éléments filetés coopérants, tels qu'un écrou fixé au secteur central et une vis pénétrant un trou de l'élément de serrage. Pour serrer une pareille barre à un toit, une personne peut serrer la vis avec un tournevis.

Un porte-charge connu du document EP 0 894 672 A correspond à la première partie de la revendication 1 et comprend au moins une barre détachable avec un profilé et deux dispositifs de fixation. Chaque dispositif de fixation a deux éléments de serrage formés par des mâchoires. Les deux mâchoires peuvent être serrées contre les côtés opposés d'une barre fixée en permanence au toit d'un véhicule à l'aide d'un écrou et d'une vis.

Des barres de ces genres connus ont les inconvénients qu'il faut chercher un tournevis propre pour serrer la barre au toit et amène surtout le risque que la fixation ne soit pas assez solide si la vis n'est pas serré suffisamment ou qu'un serrage exagéré engendre des détériorations. En plus, ces barres et/ou des accessoires fixés à ces barres peuvent facilement être volés.

Le document US 4 101 061 A décrit également une barre pour un porte-charge. La barre a deux éléments de serrage qui peuvent être tirés l'un contre l'autre à l'aide d'une manivelle reliée par un limiteur de couple à un boulon fileté coopérant avec un écrou. La manivelle servant comme organe d'actionnement reste apparemment tenue en permanence au reste de la barre. Cette barre de toit a cependant aussi l'inconvénient qu'elle peut facilement être volée.

La présente invention a pour but de former une barre améliorée dans laquelle des inconvénients des barres connues sont éliminés. Plus en détail, l'invention a pour but d'éviter que la fixation de la barre au toit ne soit pas assez solide ou qu'un serrage exagéré entraîne des détériorations et de protéger la barre en même temps contre vol.

Selon l'invention, ce but est atteint par une barre telle que définie dans la revendication 1.

Des caractéristiques préférées de l'invention font l'objet de revendications dépendantes.

L'objet de l'invention va maintenant être expliqué plus en détail à l'aide d'exemples de réalisation avantageux représentés dans les dessins. Dans les dessins:
la figure 1 est une vue d'avant de la partie supérieure d'un véhicule automobile avec une barre fixée au toit du véhicule,
la figure 2 représente une coupe dans la direction longitudinale de la barre à travers un dispositif de fixation de la barre dans l'état verrouillé du dispositif de fixation,
la figure 3 est une coupe suivant la ligne III - III de la figure 2,
les figures 4 à 6 représentent des coupes transversales suivant les lignes IV - IV, V - V et VI - VI de la figure 2,
la figure 7 représente une coupe correspondante à celle dans la figure 2, mais dans l'état déverrouillé du dispositif de fixation,
la figure 8 représente une coupe suivant la ligne VIII - VIII de la figure 7 dans l'état déverrouillé,
la figure 9 est une vue oblique d'un dispositif de fixation en état décomposé,
la figure 10 est une vue oblique de l'organe d'actionnement du dispositif de serrage,
la figure 11 est une coupe axiale de l'organe d'actionnement,
la figure 12 représente une coupe transversale à travers l'organe d'actionnement suivant la ligne XII - XII de la figure 11,
la figure 13 est une vue de l'organe d'actionnement dans la direction de la flèche XIII de la figure 11,
la figure 14 est une vue oblique de l'organe de sortie des moyens d'accouplement du dispositif de fixation,
la figure 15 est une vue de face de l'organe de sortie du côté droit de la figure 14,
la figure 16 est une élévation latérale de l'organe de sortie,
la figure 17 représente une coupe longitudinale de l'organe de sortie,
la figure 18 est une vue oblique de la serrure,
la figure 19 est une vue de dessus de la serrure et de la goupille de verrouillage dans l'état de verrouillage,
la figure 20 est une élévation latérale de la serrure, et la figure 21 est une vue d'une autre barre.

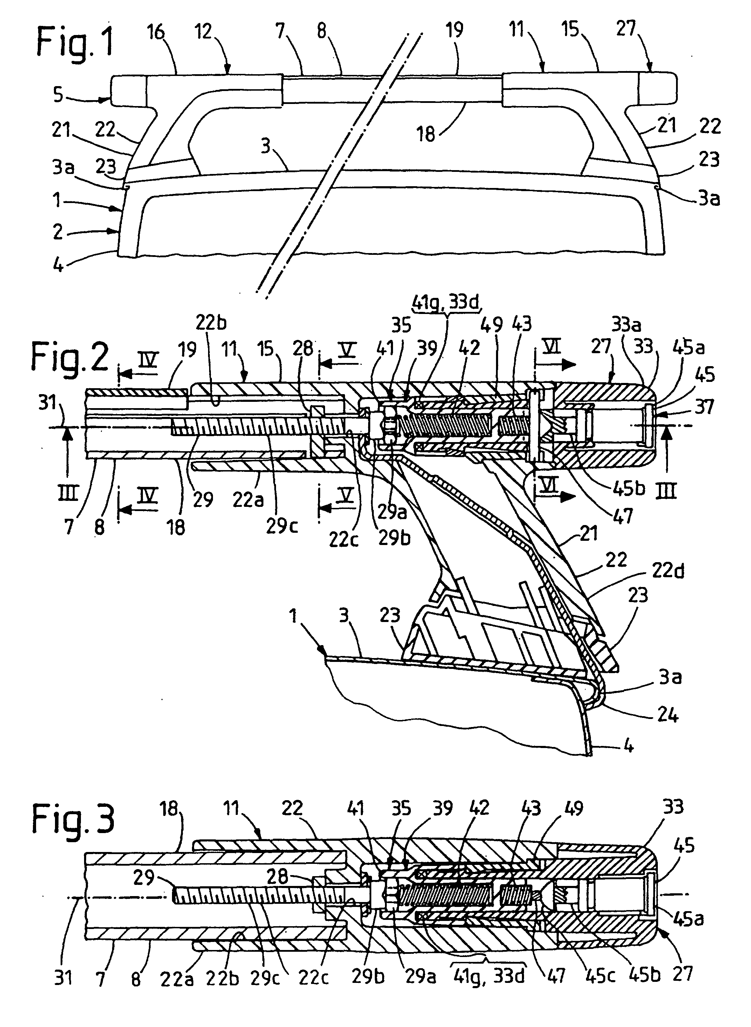

Le véhicule automobile 1 visible partiellement dans les figures 1 et 2 comporte un pavillon 2 avec un toit 3 et des parois latérales 4. Le toit 3 a deux nervures longitudinales 3a qui se trouvent aux bords longitudinaux du toit ou dans des gorges à proximité des bords longitudinaux du toit et font saillie vers les côtés du véhicule.

Un porte-charge 5 comporte au moins une barre de toit 7 et, par exemple, deux barres de toit 7. Chaque barre de toit 7 est substantiellement transversale par rapport au véhicule et a un secteur central et/ou principal 8 ainsi que des moyens de fixation. Ceux-ci comprennent un premier dispositif de fixation 11 et un deuxième dispositif de fixation 12 disposés aux extrémités opposées du secteur central et/ou principal 8 de la barre pour fixer, à savoir accrocher et serrer, celle-ci de façon détachable sur le toit.

Le premier dispositif de fixation 11 comprend un premier élément de serrage 15. Le deuxième dispositif de fixation 12 comprend un deuxième élément de serrage 16. Le premier dispositif de fixation 11 et en particulier le premier élément de serrage 15 sont reliés avec le secteur central et/ou principal 8 de la barre 7 de manière à ce qu'ils puissent être ajustés et déplacés par rapport au secteur central et/ou principal 8. Le deuxième dispositif de fixation 12 et son élément de serrage 16 sont reliés de façon immobile avec le secteur central et/ou principal 8 de la barre. Les deux dispositifs de fixation 11, 12 et leurs éléments de serrage 15, 16 constituent des embouts et bouchent le secteur central et/ou principal 8.

Une section d'extrémité du secteur central et/ou principal 8 de la barre 7 et les parts du premier dispositif de fixation 11 sont particulièrement bien visibles dans les figures 2 à 20. Le secteur central et/ou principal 8 de la barre 7 est droit et peut être constitué, par exemple, par un profilé métallique 18 ayant une ouverture longitudinale au côté supérieur et une bande d'appui 19 qui couvre cette ouverture comme il est visible en particulier dans les figures 2 à 4, 7 et 9. La bande d'appui 19 est détachable et consiste, par exemple, en matière artificielle et/ou caoutchouc.

Chaque élément de serrage 15, 16 comprend un support 21 qui est courbe et/ou forme un angle avec le secteur central et/ou principal 8. Le support comprend une crosse 22 substantiellement creuse et une pièce d'appui 23. La crosse 22 a une section tubulaire 22a avec un trou axial 22b qui pénètre toute la section tubulaire 22a et est droit ainsi qu'aligné avec le secteur central et/ou principal 8 de la barre 7. La section tubulaire 22a de la crosse forme dans sa région moyenne un rétrécissement 22c du trou axial 22b. Le profilé 18 pénètre dans le trou axial 22b de la section tubulaire 22a de la crosse 22 et prend appui contre une surface constituée du rétrécissement 22c.

La crosse 22 a une branche 22d qui est inclinée de la section tubulaire 22a vers le bas. La pièce d'appui 23 est fixée à l'extrémité inférieure de la branche 22d et prend appui sur le toit 3. Chaque élément de serrage 15, 16 comprend au moins un crochet 24 fixé au support 21 et accroché à une des nervures 3a du toit 3.

Le premier dispositif de fixation 11 comprend des moyens de réglage 27 pour ajuster et déplacer le premier dispositif de fixation 11 et son élément de serrage 15 le long du secteur central et/ou principal 8 de la barre 7. Les moyens de réglage 27 comprennent un premier élément fileté 28 et un deuxième élément fileté 29. Un des éléments filetés 28, 29 a un filet extérieur coopérant avec un filet intérieur de l'autre élément fileté. Plus en détail, le premier élément fileté 28 est pourvu du filet intérieur et constitué, par exemple, d'un écrou. Le deuxième élément fileté 29 est constitué d'une vis avec une tête 29a polygonale, à savoir hexagonale, un cou 29b cylindrique et un secteur ou boulon fileté 29c pénétrant le premier élément fileté 28 ou écrou. Ce dernier est disposé dans une section d'extrémité du profilé 18 du secteur central et/ou principal 8 de la barre et relié de façon plus ou moins rigide ou avec un petit jeu avec le profilé 18. Le deuxième élément fileté 29 constitué d'une vis est supporté mobile autour d'un axe 31 par la section tubulaire 22a de la crosse 22 du support 21. Plus en détail, la tête 29a et le cou 29b de la vis sont disposés dans le trou axial 22b au côté du rétrécissement 22c qui est détourné du profilé 18. Le cou 29b forme avec le secteur ou boulon fileté 29c une épaule avec une surface d'épaule annulaire qui est plate et perpendiculaire à l'axe 31 et prend appui directement ou via une rondelle contre une butée et/ou épaule formée par le rétrécissement 22c du trou 22b de la crosse 22.

Les moyens de réglage 27 comportent un organe d'actionnement 33 représenté séparément dans les figures 10 à 13. L'organe d'actionnement 33 est relié avec la vis formant le deuxième élément fileté 29 à l'aide des moyens d'accouplement 35. Le premier dispositif de fixation 11 comprend aussi des moyens de verrouillage 37. Les moyens d'accouplement 35 sont pourvus d'un limiteur de couple 39 pour limiter le couple de rotation lorsque l'organe d'actionnement 33 est tourné dans le sens de rotation servant de serrer la barre au toit. Il soit remarqué que l'organe d'actionnement 33 déjà mentionné et certains parts qui vont être décrits ci-après ont plusieurs fonctions et appartiennent, par exemple, au limiteur de couple 39 ainsi qu'au moyens de verrouillage 37.

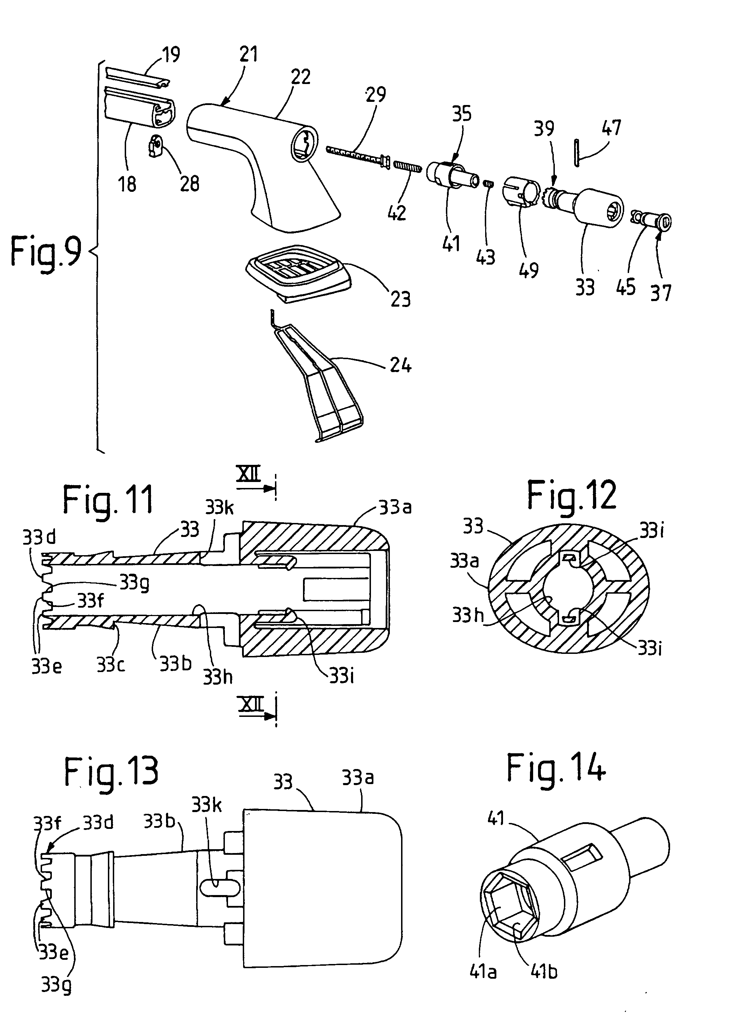

Plus en détail, l'organe d'actionnement 33 constitue aussi l'organe menant des moyens d'accouplement 35 et du limiteur du couple 39. Les moyens d'accouplement 35 et le limiteur de couple 39 comportent en plus un organe de sortie 41 représenté séparément dans les figures 14 à 17 et constitué par une douille et des moyens de ressort avec un ressort de limitation 42 ainsi qu'un ressort de verrouillage 43. Les moyens de verrouillage 37 comportent une serrure 45, une clé 46 amovible et une goupille de verrouillage 37 qui coopère avec le ressort de verrouillage 43 déjà mentionné. La crosse 22 contient en plus une bague d'arrêt 49 pour tenir différents parts en place dans la crosse. La crosse 22, l'organe d'actionnement 33, l'organe de sortie 41 et la bague d'arrêt 49 sont constitués, de préférence, en matière artificielle assez dure, mais encore un peu élastique. La pièce d'appui 23 consiste en matière artificielle molle et/ou caoutchouc. La crosse 22, la pièce d'appui 23, les organes 33, 41 et la bague 49 sont fabriqués, par exemple, par injection.

L'organe d'actionnement 33 représenté séparément dans les figures 10 à 13 comprend un bouton 33a et/ou une autre poignée formée et dimensionnée de manière à ce qu'une personne puisse serrer la barre au toit et ensuite desserrer la barre en tournant l'organe d'actionnement à la main sans utiliser un outil. L'organe d'actionnement 33 a aussi une tige tubulaire 33b avec une épaule 33c. La tige tubulaire 33b est pourvue à son extrémité opposée au bouton 33a d'une denture 33d avec des dents 33e. Les deux éléments filetés 28, 29 sont filetés à droite. Une personne peut tourner l'organe d'actionnement dans le sens des aiguilles de montre (dans une vue sur la face du bouton 33a) pour serrer la barre au toit. Les dents saillent dans une direction axiale du reste de la tige tubulaire vers le secteur central et/ou principal de la barre 7. Chacune des dents 33e a un flanc avant 33f et un flanc arrière 33g par rapport à sa direction de mouvement lors d'une rotation au sens servant à serrer la barre. Le flanc avant 33f est incliné par rapport à l'axe 31 et par rapport à un plan axial touchant la dent en question de manière à ce que le flanc avant 33f s'éloigne de la dent précédente dans la direction vers le sommet de la dent regardée. Le flanc arrière 33g de chacune des dents 33e est parallèle à l'axe 31 et à un plan axial touchant la dent. L'organe d'actionnement 33 a encore un trou axial 33h et des langues d'arrêt 33i disposées dans ce trou. Le bouton 33a de l'organe d'actionnement 33 présente une épaule à son extrémité plus proche au secteur central et/ou principal 8 de la barre et prend appui avec cette épaule contre une surface d'extrémité annulaire de la section tubulaire 22a de la crosse 22.

La paroi de la bague d'arrêt 49 possède des secteurs élastiques séparés par des fentes ou incisions axiales et est encliquetée dans la section tubulaire 22a de la crosse 22 et reliée de façon immobile à la crosse 22 et donc au support 21. Une section de la bague d'arrêt est en prise avec la gorge formée par l'épaule 33c de l'organe d'actionnement de manière à ce que l'organe d'actionnement 33 soit protégé contre des déplacements axiaux, mais puisse quand même être tourné autour de l'axe 31 par rapport à la section tubulaire 22a de la crosse 22. L'organe d'actionnement est de ce fait relié de façon imperdable à la crosse 22 du premier élément de serrage 15. Un trou oblong 33k traverse un secteur de la tige tubulaire 33b qui est voisin du bouton 33a dans une direction perpendiculaire à l'axe 31. La direction longitudinale du trou oblong est parallèle à la direction longitudinale de la tige tubulaire 33b et de l'axe 31. L'organe d'actionnement 33 consiste d'une pièce unique. Sa denture 33d servant comme partie essentielle d'un organe menant du limiteur de couple est reliée de façon rigide et naturellement aussi résistante à la torsion au reste de l'organe d'actionnement et en particulier au bouton 33a.

L'organe de sortie 41 représenté séparément dans les figures 14 à 17 a un trou borgne axial 41a débouchant dans celle des extrémités de l'organe de sortie 41 qui est plus proche au secteur central et/ou principal 8 de la barre. Le trou 41a possède à proximité de sa bouche une section polygonale 41b, à savoir une section hexagonale. La tête 29a hexagonale du deuxième élément fileté 29 est situé avec petit jeu latéral dans la section polygonale 41b du trou de manière à ce que le deuxième élément fileté 29 soit relié de façon substantiellement résistante à la torsion avec l'organe de sortie 41, mais que celui-ci puisse glisser en direction axiale le long de la tête 29a par rapport au deuxième élément fileté 29. Le trou 41a a entre son fond et la section polygonale 41b une section substantiellement cylindrique 41c qui loge au moins une grande partie du ressort de limitation 42. L'organe de sortie 41 comprend encore un deuxième trou borgne axial 41d qui débouche dans celle des extrémités de l'organe de sortie qui est plus éloignée du secteur central et/ou principal 8 de la barre. Le trou 41d loge une partie du ressort de verrouillage 43. L'organe de sortie 41 possède un élargissement 41e qui se trouve à peu près dans la région centrale de la surface latérale. Cet élargissement est pourvu d'une rainure annulaire 41f qui coure sensiblement dans une direction axiale et est ouverte au côté plus éloigné des éléments filetés. Le fond de cette rainure annulaire 41c est pourvu d'une denture 41g. Celle-ci a des dents qui saillent axialement vers et normalement dans la denture 33d et sont complémentaires à celles de la denture 33d de l'organe d'actionnement 33. Les dents de la denture 41g ont en particulier des flancs arrières qui sont inclinés contre une direction parallèle à l'axe 31. Lorsque les deux dentures 33d, 41g s'engrènent, le flanc arrière de chacune des dents de la denture 41g est approximativement parallèle au flanc avant 33f de la dent 33e voisine de la denture 33d.

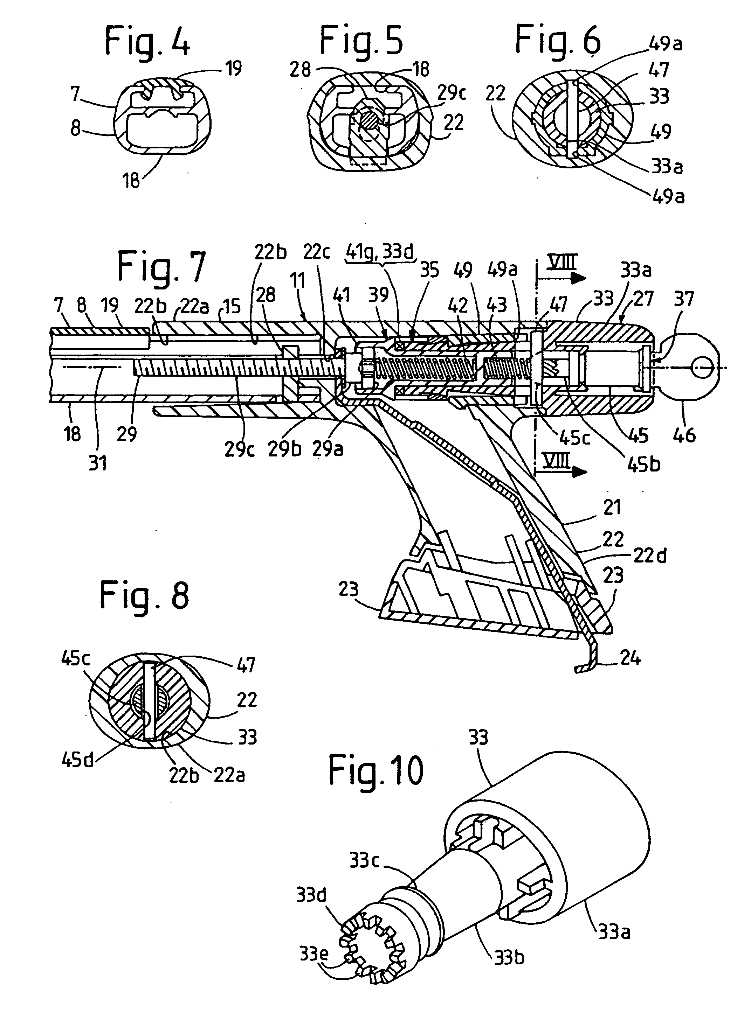

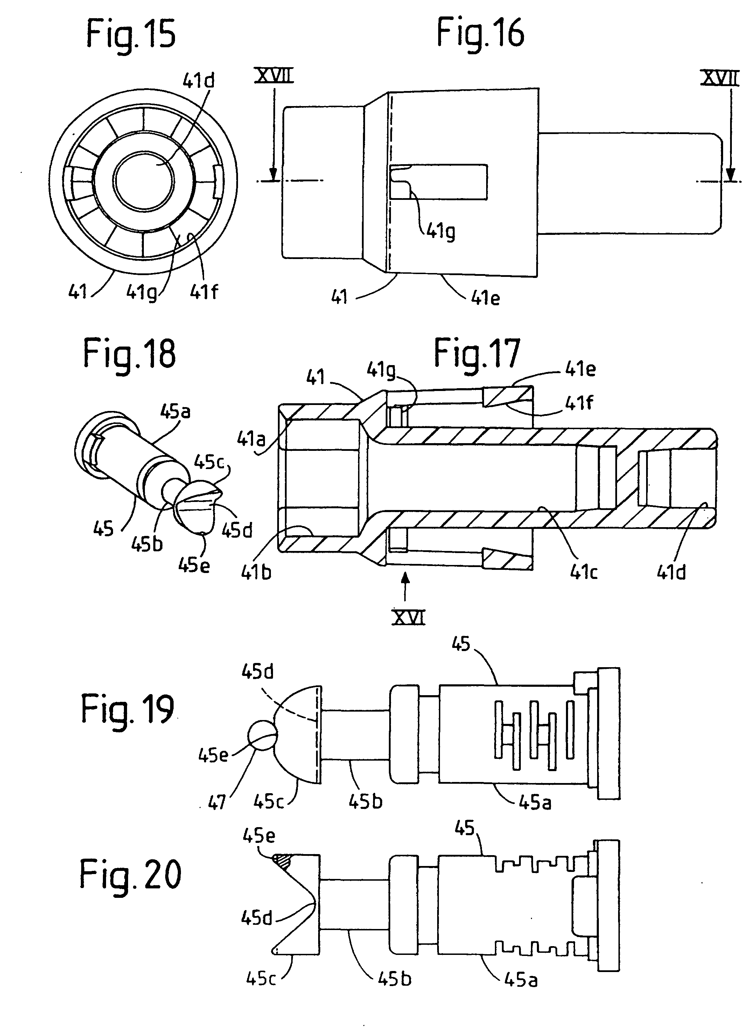

La serrure 45 représentée séparément dans les figures 18 à 20 comporte un carter 45a qui est logé dans l'intérieur du bouton 33a de l'organe d'actionnement 33 de manière à ce que la face de la serrure est approximativement à fleur de celle des extrémités du bouton 33a qui est plus éloignée du secteur central et/ou principal 8 de la barre 7. Le carter 45a est en général cylindrique, mais possède à son extrémité plus éloignée du secteur central et/ou principal 8 de la barre 7 un col annulaire constituant une saillie radiale et à proximité de son autre extrémité une rainure annulaire. Les langues d'arrêt 33i de l'organe d'actionnement 33 sont encliquetées dans cette rainure annulaire et retiennent la serrure 45 dans l'organe d'actionnement. La serrure possède un boulon 45b avec une tête 45c. La face de la tête 45c a en général à peu près la forme d'une demi-boule, mais est pourvue d'un premier encastrement 45d et d'un deuxième encastrement 45e. Le premier encastrement 45d traverse la tête diamétralement et a approximativement une forme de V dans une coupe axiale. Le deuxième encastrement est distinctement moins profond que le premier encastrement 45d et constitue une partie d'une surface cylindrique qui est aussi diamétrale par rapport à la tête et perpendiculaire à la direction diamétrale du premier encastrement 45d. La clé 46 amovible et représentée dans la figure 7 permet de tourner le boulon 45b par un angle de 90° autour de l'axe 31.

La goupille de verrouillage 47 pénètre le trou oblong 33k de la tige tubulaire 33b de l'organe d'actionnement 33 et peut être déplacée dans ce trou oblong 33k dans une direction parallèle à l'axe 31. La paroi tubulaire de la bague d'arrêt 49 est pourvue de deux incisions 49a à l'extrémité de la bague qui se trouve en face du bouton 33a. Ces incisions 49a sont formées de manière à ce que les deux extrémités de la goupille 47 puissent entrer dans les incisions 49a et ressortir de celles-ci dans une direction parallèle à l'axe 31. La goupille constitue donc un genre de verrou.

L'une des extrémités du ressort de limitation 42 prend appui contre la tête 29a du deuxième élément fileté 29 constitué d'une vis. L'autre extrémité du ressort de limitation 42 applique une force de pression axiale sur l'organe de sortie 41 au fond du trou borgne 41a et a la tendance de pousser la denture 41g de l'organe de sortie 41 contre la denture 33d de l'organe d'actionnement 33. L'une des extrémités du ressort de verrouillage 43 prend appui au fond du trou borgne 41d de l'organe de sortie 41. L'autre extrémité du ressort de verrouillage 43 applique une force de pression axiale sur la goupille 47 et presse celle-ci contre la tête 45c du boulon 45b. Le ressort de verrouillage 43 applique naturellement aussi une force antagoniste sur l'organe de sortie 41. Cette force antagoniste est opposée à la force appliquée par le ressort de limitation 42. La force produite par le ressort de limitation est cependant plus grande que celle produite par le ressort de verrouillage de manière à ce que la force résultante presse la denture 41g de l'organe de sortie 41 contre la denture 33d de l'organe d'actionnement 33.

Les figures 5 à 6 illustrent l'état verrouillé du premier dispositif de fixation 11. La clé amovible est séparée de la serrure 45 et celle-ci se trouve dans l'état de verrouillage. Le boulon 45b et sa tête 45c sont alors dans la position de verrouillage dans laquelle la goupille 47 est située dans le deuxième encastrement 45e de la tête 45c de la serrure. Cette tête presse la goupille contre la force appliquée du ressort de verrouillage 43 dans les incisions 49a de la bague d'arrêt 49. La goupille 47 verrouille alors l'organe d'actionnement 33 et empêche que celui-ci peut être tourné par rapport à la bague d'arrêt et à la section tubulaire 22a. L'organe d'actionnement 33 peut servir dans l'état verrouillé aussi comme protection antivol.

Une personne peut introduire la clé 46 dans la serrure 45 et tourner le boulon 45b et la tête 45c du boulon à l'aide de la clé dans la position de déverrouillage représentée dans les figures 7 et 8. Le ressort de verrouillage 43 pousse alors la goupille dans le premier encastrement 45d de la tête 45c. Ceci fait sortir la goupille des incisions 49a de la bague d'arrêt et déverrouille l'organe d'actionnement. Une personne peut maintenant saisir le bouton 33a à la main, tourner l'organe d'actionnement 33 et ensuite verrouiller l'organe d'actionnement de nouveau. La serrure est éventuellement configurée de manière à ce que la clé 46 puisse être enlevée seulement dans l'état de verrouillage.

Lorsqu'une personne tourne l'organe d'actionnement 33 constituant aussi l'organe menant du limiteur de couple 39 dans le sens de rotation servant pour serrer la barre au toit et lorsque la denture 33d de l'organe d'actionnement égrène la denture 41g de l'élément de sortie, l'inclinaison des flancs avant 33f des dents 33e de l'organe d'actionnement 33 servant ainsi comme organe menant et des flancs arrières des dents de la denture 41g de l'organe de sortie 41 engendrent une force axiale. Cette force s'oppose à la force qui résulte des forces appliquées par des ressorts 42, 43 sur l'organe de sortie 41 et a la tendance de déplacer l'organe de sortie 41 dans une direction axiale et de faire sortir la denture 41g de la denture 33d. Les deux dentures restent donc en engrènement tant que le couple de rotation transmis de l'organe d'actionnement 33 à l'organe de sortie 41 reste au-dessous d'une limite déterminée par la force résultante qui est produite par les moyens de ressort constitués par les deux ressorts 42, 43. Si la valeur du couple de rotation appliqué pour serrer la barre atteint ou excède ladite limite, l'organe de sortie 41 est débrayé de l'organe d'actionnement au moins temporairement, c'est à dire jusqu'à la terminaison de la rotation de l'organe d'actionnement.

Si une personne tourne l'organe d'actionnement dans le sens de rotation servant à desserrer la barre 7, les dentures ne produisent pratiquement pas de force axiale. Le couple de rotation n'est donc pas limité lors du desserrement de la barre.

L'organe d'actionnement 33 et son bouton 33a restent normalement reliés en permanence au reste de la barre et sont donc intégrés dans celle-ci. La force nécessaire pour serrer ou desserrer la barre peut être produite en tournant le bouton 33a à la main et sans outil. La barre peut donc être fixée sur le toit et détachée de celui-ci sans que l'on ait besoin de chercher et se procurer un outil. Le premier dispositif de fixation 11 et son support 21 peuvent cependant éventuellement être séparés temporairement du secteur central et/ou principal 8 de la barre dans des cas spéciaux, par exemple, pour remplacer un élément ou pour introduire un accessoire dans le secteur central et/ou principal 8 de la barre.

La limite du couple de rotation, dans laquelle le limiteur de couple est débrayé, peut être déterminée de manière à ce que la limite du couple soit à peu près égale au couple optimal pour le serrage. Ceci permet à une personne de tourner l'organe d'actionnement 33 du premier dispositif de fixation 11 lors du serrage de la barre jusqu'au débrayage du limiteur de couple 39.

La barre 7 peut donc être serrée et desserrée de façon rapide et simple sans l'utilisation d'un outil. La formation du premier dispositif de fixation 11 assure lors du serrage en plus une fixation solide de la barre sans le risque de détériorer quelque chose par un serrage exagéré.

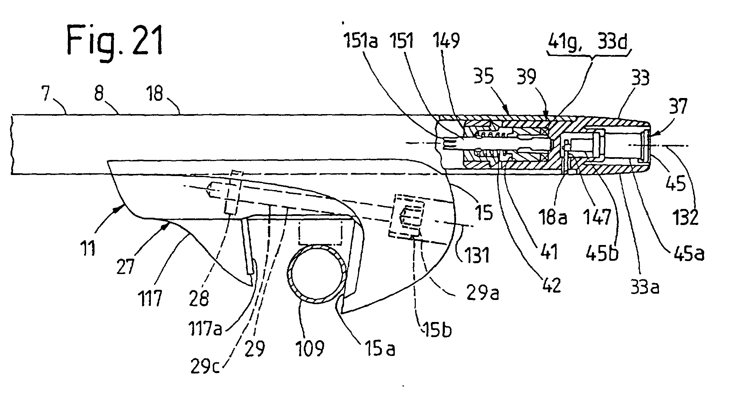

La variante d'un porte-charge représentée partiellement dans la figure 21 est en partie similaire au porte-charge 5 décrit en référence aux figures 1 à 20. Les pièces de la variante selon la figure 21 qui sont plus ou moins similaires à des pièces représentées dans les figures 1 à 20 sont désignées ci-après par les mêmes repères.

Le porte-charge visible dans la figure 21 possède deux barres qui s'étendent dans une direction longitudinale par rapport au véhicule automobile et dont une est représentée et désignée par 109. Les barres longitudinales 109 peuvent rester, par exemple, en permanence sur le toit. Le porte-charge comprend en plus au moins une barre 7 et, de préférence, au moins deux barres 7 dont chacune est transversale par rapport au véhicule et donc perpendiculaire aux barres longitudinales 109. Chaque barre 7 comprend un secteur central et/ou principal 8 et deux dispositifs de fixation 11 arrangés à proximité des extrémités du secteur central et/ou principal de la barre 7. Le secteur central et/ou principal comprend un profilé 18 métallique qui est, par exemple, en général tubulaire, mais possède une fente au côté inférieur et éventuellement aussi au côté supérieur. Les deux dispositifs de fixation 11 disposés près des deux extrémités de la barre 7 sont substantiellement identiques et symétriques par rapport à un plan perpendiculaire à l'axe longitudinale de la barre 7. Chaque dispositif de fixation 11 comporte un premier élément de serrage 15 avec une première mâchoire 15a et un deuxième élément de serrage 117 avec une deuxième mâchoire 117a. Les deux éléments de serrage 15, 117 sont arrangés au côté inférieur du profilé 18, pénètrent dans un canal formé de celui-ci et sont guidés du profilé de manière à ce qu'ils puissent être déplacés le long du profilé 18.

Chaque dispositif de fixation 11 comprend des moyens de réglage 27 avec un écrou constituant un premier élément fileté 28 et une vis constituant un deuxième élément fileté 29 avec une tête 29a et un secteur ou boulon fileté 29c. La tête 29a a un creux polygonal, à savoir hexagonal. L'écrou formant le premier élément fileté 28 est logé dans une cavité du deuxième élément de serrage 117. La tête 29a et une partie du secteur ou boulon fileté 29c du deuxième élément fileté 29 sont logées dans une cavité du premier élément de serrage 15 et supportés de manière à ce que le deuxième élément fileté 29 soit mobile autour d'un axe 131. Cet axe 131 est incliné par rapport au secteur central et/ou principal 8 de la barre 7. La tête 29a ou une épaule d'un cou éventuellement présent prend appui directement ou via une rondelle contre une surface d'appui du premier élément de serrage. Le premier élément de serrage 15 a un trou 15b qui est aligné avec le deuxième élément fileté 29 pour rendre accessible la tête 29a de cet élément fileté de l'extérieur. Le secteur ou boulon fileté du deuxième élément fileté 29 pénètre l'écrou formant le premier élément fileté 28 et coopère avec celui-ci. Les deux éléments filetés 28, 29 permettent de serrer les deux mâchoires 15a, 117a contre les côtés opposés de la barre longitudinale 109. Les deux éléments de serrage 15, 117 sont configurés de façon pour permettre, en plus de mouvements de translation des deux éléments de serrage, un mouvement limité de basculement du deuxième élément de serrage 117 sous l'action d'un couple de rotation dû à la force de serrage produite par les deux éléments filetés 28, 29 et à la force de réaction exercée sur le deuxième élément de serrage 117 par la barre longitudinale 109. Ce mouvement de basculement provoque un blocage du deuxième élément de serrage 117 par coincement de celui-ci dans le canal du profilé 18. Il est fait référence à cet égard au document EP 0 894 672 A déjà cité qui révèle des détails des éléments de serrage similaires.

Les moyens de réglage 27 comportent en plus un organe d'actionnement 33 et des moyens d'accouplement 35 avec un limiteur de couple 39. L'organe d'actionnement 33 possède un bouton 33a et une denture 33d et forme - comme dans la première variante décrite - aussi un organe menant des moyens d'accouplement 35 et aussi du limiteur de couple 39. L'organe de sortie 41 est substantiellement logé dans l'intérieur de l'organe d'actionnement 33 et a une denture 41g. Une bague d'arrêt 149 qui correspond plus ou moins à la bague d'arrêt 49 est arrangée également substantiellement dans l'intérieur de l'organe d'actionnement 33. Un ressort de limitation 42 est également disposé dans l'organe d'actionnement et a une extrémité prenant appui contre la bague d'arrêt. L'autre extrémité du ressort 42 applique une force de pression sur l'organe de sortie 41. L'organe d'actionnement 33 et la bague d'arrêt 149 supportent encore un organe de transmission 151 qui est constitué, par exemple d'un arbre et ressaut de l'extrémité de l'organe d'actionnement 33 opposée au bouton 33a. L'organe ou l'arbre de transmission a une section d'entraînement 151a qui se trouve en dehors de l'organe d'actionnement 33 et forme une clé pour vis à six pans creux. L'organe d'actionnement et l'organe de sortie définissent un axe 132 commun. L'organe de transmission 151 coopère avec l'organe de sortie 41 de manière à ce qu'il soit relié de façon résistante à la torsion à l'organe de sortie 41, mais que celui-ci puisse glisser le long de l'axe 132 par rapport à l'organe de transmission 151.

L'organe d'actionnement 33 peut être introduit alternativement dans une des extrémités du profilé 18 ou dans le trou 15b du premier élément de serrage 15. Dans l'état représenté dans la figure 21, l'organe d'actionnement 33 se trouve dans le profilé 18 et prend appui avec une épaule du bouton 33a contre le bord de l'extrémité du profilé 18. L'organe d'actionnement 33 et la serrure 45 servent alors comme embout et/ou bouchon et bouchent l'extrémité du profilé 18 formant le secteur central et/ou principal 8 de la barre 7.

Le dispositif de fixation 11 visible dans la figure 21 comporte aussi des moyens de verrouillage 37 avec une serrure 45 à clé amovible. Cette serrure 45 possède un carter 45a logé dans le bouton 33a et un boulon 45b qui peut être tourné autour de l'axe 132 par rapport à l'organe d'actionnement 33. Les moyens de verrouillage comportent aussi un verrou 147 qui correspond plus ou moins à la goupille 47. Le verrou 147 est cependant tenu et guidé de manière à ce qu'il puisse être déplacé par des moyens de positionnement du boulon 45b dans une direction perpendiculaire à l'axe 132. Ces moyens de positionnement peuvent, par exemple, comprendre un excentrique ou une came ou quelque chose de ce genre. Le verrou 147 peut être déplacé par des rotations du boulon alternativement dans une position de verrouillage ou dans une position de déverrouillage. Si le verrou 147 se trouve dans la position de verrouillage, il pénètre dans un trou 18a du profilé 18 et verrouille l'organe d'actionnement 33 par rapport au profilé 18. Lorsque la barre 7 est fixée sur le toit du véhicule automobile dans une position désirée pour servir comme part du porte-charge, l'organe d'actionnement 33 est normalement introduit dans le profilé 18 ainsi que verrouillé et peut servir comme protection antivol.

Si une personne veut déplacer ou détacher la barre 7, cette personne peut déverrouiller l'organe d'actionnement 33 à l'aide d'une clé, retirer l'organe d'actionnement du profilé et l'introduire dans le trou 15b de manière à ce que la section d'entraînement 151a de l'organe de transmission 151 soit amené en prise avec le creux de la tête 29a du deuxième élément fileté 29. Ladite personne peut ensuite tourner le deuxième élément fileté pour desserrer les deux éléments de serrage 15 et 117.

Si une personne veut serrer la barre 7 de nouveau, cette personne peut introduire l'organe d'actionnement 33 de nouveau dans le trou 15b, amener la section d'entraînement 151a de l'organe de transmission 151 en prise avec la tête 29a du deuxième élément fileté 29 et tourner le bouton 33a à la main dans le sens de rotation servant à serrer le dispositif de fixation. La personne peut alors tourner l'organe d'actionnement jusqu'à ce que le limiteur de couple 39 est débrayé. La personne peut ensuite enlever l'organe d'actionnement 33 du deuxième élément fileté 29, introduire l'organe d'actionnement dans le profilé 18 et verrouiller l'organe d'actionnement.

A moins que rien d'autre ait été écrit préalablement, les moyens de fixation et de verrouillage représentés dans la figure 20 peuvent être similaires et être utilisés similairement que ceux décrits en référence aux figures 1 à 20.

Le porte-charge et les barres 7 peuvent encore être modifiés autrement. Le deuxième dispositif de fixation 12 visible dans la figure 1 pourrait éventuellement aussi être déplaçable par rapport au secteur central et/ou principal 8 de la barre et alors être formé similairement au premier dispositif de fixation 11.

Le premier élément fileté 28 disposé dans le profilé 18 ou dans le deuxième élément de serrage 117 et constitué d'un écrou pourrait éventuellement être remplacé par un élément fileté avec un filet extérieur. Le deuxième élément fileté 29 formé d'une vis serait alors remplacé par un élément mobile autour d'un axe, mais ayant naturellement un filet intérieur. Le limiteur de couple de rotation pourrait éventuellement être configuré de manière à ce que l'organe d'actionnement soit directement ou indirectement bloqué si la valeur du couple de rotation atteint ou excède la limite prévue.

## Revendications

1. Barre destinée à être serrée de façon détachable sur le toit (3) d'un véhicule automobile (1), ayant un secteur central et/ou principal (8), au moins un élément de serrage (15) déplaçable par rapport au secteur central et/ou principal (8) et des moyens de réglage (27) pour déplacer l'élément de serrage (15), les moyens de réglage (27) comprenant un premier élément fileté (28), un deuxième élément fileté (29) et un organe d'actionnement (33) tournant, le premier élément fileté (28) étant tenu par le secteur central et/ou principal (8) ou par un élément de serrage (117) additionnel, le deuxième élément fileté (29) étant tenu par l'élément de serrage (15) de façon tournante et les deux éléments filetés (28, 29) ayant des filets coopérants l'un avec l'autre, **caractérisée en ce que** l'organe d'actionnement (33) tournant est relié et/ou peut être relié au deuxième élément fileté (29) par un limiteur de couple (39) pour limiter le couple de rotation lorsque l'organe d'actionnement (33) est tourné dans un sens de rotation servant à serrer la barre, que l'élément de serrage (15) est équipé de moyens de verrouillage (37) avec une serrure (45) à commande par clé (46) amovible, que la serrure (45) est tenue dans l'organe d'actionnement (33) et que les moyens de verrouillage (37) sont formés pour bloquer l'organe d'actionnement (33) dans un état verrouillé de la serrure (45).

2. Barre selon la revendication 1, **caractérisée en ce que** le limiteur de couple (39) est configuré pour débrayer le deuxième élément fileté (29) de l'organe d'actionnement (33) et/ou pour éviter une rotation de l'organe d'actionnement (33), si le couple de rotation appliqué pour serrer la barre est au moins égal à une limite.

3. Barre selon la revendication 2, **caractérisée en ce que** le limiteur de couple (39) est formé de manière à ce qu'il puisse transmettre des couples de rotation excédant la limite si l'organe d'actionnement (33) est tourné dans un sens de rotation servant à desserrer la barre.

4. Barre selon la revendication 2 ou 3, **caractérisée en ce que** le limiteur de couple (33) a un organe menant mobile autour d'un axe (31, 132) et relié de façon substantiellement résistante à la torsion à l'organe d'actionnement (33), un organe de sortie (41) mobile autour de l'axe (31, 132) et relié ou pouvant être relié de façon substantiellement résistante à la torsion au deuxième élément fileté (29) et des moyens de ressort qui pressent l'organe menant et l'organe de sortie (41) l'un contre l'autre, que l'organe menant et l'organe de sortie (41) sont pourvus des dentures (33d, 41g) qui sont formées de manières à ce qu'elles s'engrènent si le couple de rotation est au-dessous de la limite et qu'elles soient séparées au moins temporairement si le couple de rotation atteint ou excède la limite lors d'un serrage de la barre.

5. Barre selon la revendication 4, **caractérisée en ce que** les dentures (33d, 41g) ont des dents (33e) saillant en direction axiale de l'une denture (33d, 41g) vers l'autre denture (33d, 41g) et que chaque dent (33e) de l'organe menant a un flanc (33f) avant et un flanc (33g) arrière par rapport à sa direction de mouvement lors d'un serrage de la barre, que les flancs avants (33f) sont inclinés par rapport à l'axe (31, 132) de manière à ce qu'ils s'éloignent de la dent (33e) précédante vers un sommet de la dent (33e) respective et que les flancs arrières (33g) sont substantiellement parallèles à l'axe (31, 132).

6. Barre selon la revendication 4 ou 5, **caractérisée en ce que** l'organe d'actionnement (33) et l'organe menant consiste d'une seule pièce.

7. Barre selon l'une quelconque des revendications 1 à 6, **caractérisée en ce que** l'organe d'actionnement (33) est relié de façon imperdable à l'élément de serrage (15) et formé et dimensionné de manière à ce que l'organe d'actionnement (33) puisse être tourné à la main sans l'utilisation d'un outil.

8. Barre selon l'une quelconque des revendications 1 à 7, **caractérisée en ce que** l'élément de serrage (15) comprend un support (21), que les moyens de verrouillage (37) sont formés pour permettre de mettre la serrure (45) dans l'état verrouillé et pour empêcher alors une rotation de l'organe d'actionnement (33) par rapport au support (21) lorsque l'organe d'actionnement (33) est relié au deuxième élément fileté (29) par le limiteur de couple (39).

9. Barre selon l'une quelconque des revendications 1 à 8, **caractérisée en ce que** l'élément de serrage (15) comprend un support (21) avec une crosse (22) qui a une section tubulaire (22a) et une branche (22d) destinée à prendre appui sur le toit (3), que la section tubulaire (22a) de la crosse (22) a un trou axial (22b) qui pénètre toute la section tubulaire (22a) et est aligné avec le secteur central et/ou principal (8), que le deuxième élément fileté (29) et une tige (33b) de l'organe d'actionnement (33) sont tenus dans la section tubulaire (22a) et que les moyens de verrouillage (37) sont formés pour empêcher une rotation de l'organe d'actionnement (33) par rapport à la section tubulaire (22a) dans l'état verrouillé de la serrure (45).

10. Barre selon la revendication 9, **caractérisée en ce que** l'élément de serrage (15) comprend une bague d'arrêt (49) qui est fixée de façon immobile dans la section tubulaire (22a) et a deux incisions (49a), que la tige (33b) de l'organe d'actionnement (33) a un trou (33k) qui traverse la tige (33b) et est oblong dans la direction longitudinale de la tige (33b), que les moyens de verrouillage (37) comportent une goupille de verrouillage (47) qui pénètre le trou (33k) de la tige (33b) et est déplaçable dans la direction longitudinale de la tige (33b) et que la serrure (45) est formée pour presser la goupille de verrouillage (47) dans les incisions (49a) de la bague d'arrêt (49) dans l'état verrouillé .

11. Barre selon l'une quelconque des revendications 1 à 10, **caractérisée en ce que** le secteur central et/ou principal (8) présente deux extrémités, que l'élément de serrage (15) est relié à une des extrémités du secteur central et/ou principal (8), qu'un autre élément de serrage (16) est relié à l'autre extrémité du secteur central et/ou principal (8) et que les deux éléments de serrage (15, 16) sont pourvus de crochets (24) configurés à être accrochés à des nervures (3a) du toit (3), le dit autre élément de serrage (16) étant, de préférence, relié de façon immobile au secteur central et/ou principal (8).

12. Barre selon l'une quelconque des revendications 1 à 7, **caractérisée en ce que** deux dispositifs de fixation (11) sont présents dont chacun comprend un premier élément de serrage (15) et un deuxième élément de serrage (117), que chacun des éléments de serrage (15, 117) est relié de façon déplaçable au secteur central et/ou principal (8), que les moyens de réglage (27) comportent deux éléments filetés (28, 29), un organe d'actionnement (33) et un limiteur de couple (39) pour chacun des dispositifs de fixation (11) et que chacun des éléments de serrage (15, 117) possède une mâchoire (15a, 117a) pour serrer la barre à une barre longitudinale (109) fixée au toit (3) .

## Patentansprüche

1. Zum lösbaren Festklemmen auf dem Dach (3) eines Automobils (1) bestimmte Stange mit einem Mittel- und/oder Hauptabschnitt (8), mindestens einen bezüglich des Mittelund/oder Hauptabschnitts (8) verstellbarem Klemmelement (15) und Stellmitteln (27) zum Verstellen des Klemmelements (15), wobei die Stellmittel (27) ein erstes Gewindeelement, (28) ein zweites Gewindeelement (29) und ein drehbares Betätigungsorgan (33) aufweisen, wobei das erste Gewindeelement (28) vom Mittel- und/oder Hauptabschnitt (8) oder von einem zusätzlichen Klemmelement (117) gehalten ist, wobei das zweite Gewindeelement (29) drehbar vom Klemmelement (15) gehalten ist und wobei die beiden Gewindeelemente (28, 29) miteinander zusammenwirkende Gewinde haben, **dadurch gekennzeichnet, dass** das drehbare Betätigungsorgan (33) über einen Drehmoment-Begrenzer mit dem zweiten Gewindeelement (29) verbunden und/oder verbindbar ist, um das Drehmoment zu begrenzen, wenn das Betätigungsorgan (33) in einen zum Festklemmen der Stange dienenden Drehsinn gedreht wird, dass das Klemmelement (15) mit Verriegelungsmitteln (37) mit einem Schloss (45) mit abnehmbarem Schlüssel (46) ausgerüstet ist, dass das Schloss (45) im Betätigungsorgan (33) gehalten ist und dass die Verriegelungsmittel (37) ausgebildet sind, um das Betätigungsorgan (33) in einem verriegelten Zustand des Schlosses (45) zu blockieren.

2. Stange nach Anspruch 1 **dadurch gekennzeichnet, dass** der Drehmoment-Begrenzer (39) ausgebildet ist, um das zweite Gewindeelement (29) vom Betätigungsorgan (33) zu entkuppeln und/oder um eine Drehung des Betätigungsorgans (33) zu verhindern, wenn das zum Festklemmen der Stange ausgeübte Drehmoment mindestens gleich einem Grenzwert ist.

3. Stange nach Anspruch 2 **dadurch gekennzeichnet, dass** der Drehmoment-Begrenzer (39) derart ausgebildet ist, dass er den Grenzwert übersteigende Drehmoment übertragen kann, wenn das Betätigungsorgan (33) in einem zum Lösen der Stange dienenden Drehsinn gedreht wird.

4. Stange nach Anspruch 2 oder 3, **dadurch gekennzeichnet, dass** der Drehmoment-Begrenzer (39) ein um eine Achse (31,132) drehbares und im Wesentlichen drehfest mit dem Betätigungsorgan (33) verbundenes Antriebsorgan, ein um die Achse (31, 132) drehbares, drehfest mit dem zweiten Gewindeelement (29) verbundenen oder verbindbares Abtriebsorgan (41) und Federmittel aufweist, die das Antriebsorgan und das Abtriebsorgan (41) gegeneinander pressen, dass das Antriebsorgan und das Abtriebsorgan (41) mit Verzahnungen (33d, 41g) versehen sind, die derart ausgebildet sind, dass sie ineinander eingreifen, wenn das Drehmoment unterhalb des Grenzwerts ist, und dass sie mindestens vorübergehend getrennt werden, wenn das Drehmoment den Grenzwert beim Festklemmen der Stange erreicht oder übersteigt.

5. Stange nach Anspruch 4 **dadurch gekennzeichnet, dass** die Verzahnungen (33d, 41g) Zähne (33e) haben, die in axialer Richtung von einer Verzahnung (33d, 41g) gegen die andere Verzahnung (33d, 41g) ragen, und dass jeder Zahn (33e) des Antriebsorgans bezüglich seiner Bewegungsrichtung beim Festklemmen der Stange eine Vorderflanke (33f) und eine Hinterflanke (33g) hat, dass die Vorderflanken (33f) bezüglich der Achse (31,132) derart geneigt sind, dass sie sich zu einem Scheitel des betreffenden Zahns (33e) hin vom vorangehenden Zahn (33e) entfernen, und dass die Hinterflanken (33g) im Wesentlichen parallel zur Achse (31, 132) sind.

6. Stange nach Anspruch 4 oder 5, **dadurch gekennzeichnet, dass** das Betätigungsorgan (33) und das Antriebsorgan aus einem Stück bestehen.

7. Stange nach einem der Ansprüche 1 bis 6, **dadurch gekennzeichnet, dass** das Betätigungsorgan (33) unverlierbar mit dem Klemmelement (15) verbunden und derart ausgebildet und bemessen ist, dass das Betätigungsorgan (33) ohne Verwendung eines Werkzeugs von Hand gedreht werden kann.

8. Stange nach einem der Ansprüche 1 bis 7, **dadurch gekennzeichnet, dass** das Klemmelement (15) einen Support (21) aufweist, dass die Verriegelungsmittel (37) ausgebildet sind, um zu ermöglichen, das Schloss (45) in den verriegelten Zustand zu bringen und um dann eine Drehung des Betätigungorgans (33) bezüglich des Supports (21) zu verhindern, wenn das Betätigungsorgan (33) durch den Drehmoment-Begrenzer (39) mit dem zweiten Gewindeelement (29) verbunden ist.

9. Stange nach einem der Ansprüche 1 bis 8, **dadurch gekennzeichnet, dass** das Klemmelement (15) einen Support (21) mit einem Stock (22) aufweist, der einen rohrförmigen Abschnitt (22a) und einen zum Aufliegen auf dem Dach (3) bestimmten Schenkel (22d) hat, dass der rohrförmige Abschnitt (22a) des Stocks (22) ein axiales Loch (22b) hat, das den ganzen rohrförmigen Abschnitt (22a) durchdringt und mit dem Mittel- und/oder Hauptabschnitt fluchtet, dass das zweite Gewindeelement (29) und ein Schaft (33g) des Betätigungsorgans (33) im rohrförmigen Abschnitt (22a) gehalten sind und dass die Verriegelungsmittel (37) ausgebildet sind, um im verriegelten Zustand des Schlosses (45) eine Drehung des Betätigungsorgans (33) bezüglich des rohrförfmigen Abschnitts (22a) zu verhindern.

10. Stange nach Anspruch 9, dadurch gekennzeichntet, dass das Klemmelement (15) einen Sperr-Ring (49) aufweist, der unbewegbar im rohrförmigen Abschnitt (22a) befestigt ist und zwei Einschnitte (49a) hat, dass der Schaft (33b) des Betätigungsorgans (33) ein Loch (33k) hat, das den Schaft (33b) durchdringt und in der Längsrichtung des Schafts (33b) länglich ist, dass die Verriegelungsmittel (37) einen Verriegelungsstift (47) aufweisen, der das Loch (33k) des Schafts (33b) durchdringt und in der Längsrichtung des Schafts (33b) verschiebbar ist und dass das Schloss (45) ausgebildet ist, um den Verriegelungsstift (47) im verriegelten Zustand in die Einschnitte (49a) des Sperr-Rings (49) zu pressen.

11. Stange nach einem der Ansprüche 1 bis 10, **dadurch gekennzeichnet, dass** der Mittel- und/oder Hauptabschnitt (8) zwei Enden hat, dass das Klemmelement (15) mit einem der Enden des Mittel- und/oder Hauptabschnitts (8) verbunden ist, dass ein anderes Klemmelement (16) mit dem anderen Ende des Mittel- und/oder Hauptabschnitts (8) verbunden ist und dass die zwei Klemmelemente (15, 16) mit Haken (24) versehen sind, die zum Einhängen in Rippen (3a) des Dachs (3) ausgebildet sind, wobei das genannte andere Klemmelement (16) vorzugsweise unbeweglich mit dem Mittel- und/oder Hauptabschnitt (8) verbunden ist.

12. Stange nach einem der Ansprüche 1 bis 7, **dadurch gekennzeichnet, dass** zwei Befestigungsvorrichtungen (11) vorhanden sind, von denen jede ein erstes Klemmelement (15) und ein zweites Klemmelement (117) aufweist, dass jedes der Klemmelemente (15, 117) verschiebbar mit dem Mittel- und/oder Hauptabschnitt (8) verbunden ist, dass die Stellmittel (27) für jede der Befestigungsvorrichtungen (11) zwei Gewindeelemente (28, 29), ein Betätigungsorgan (33) und einen Drehmoment-Begrenzer (39) aufweisen und dass jedes der Klemmelemente (15, 117) eine Klemmbacke (15a, 115a) aufweist, um die Stange an einer am Dach (3) befestigten Längsstange (109) festzuklemmen.

## Claims

1. Bar intended to be clamped removably on the roof (3) of a motor vehicle (1), having a central and/or main sector (8), at least one clamping element (15) that can be moved with respect to the central and/or main sector (8) and adjusting means (27) for moving the clamping element (15), the adjusting means (27) comprising a first threaded element (28), a second threaded element (29) and a rotary actuating member (33), the first threaded element (28) being held by the central and/or main sector (8) or by an additional clamping element (117), the second threaded element (29) being held by the clamping element (15) in a rotary way and the two threaded elements (28, 29) having screw threads that collaborate with one another, the bar being **characterized in that** the rotary actuating member (33) is connected and/or may be connected to the second threaded element (29) by a torque limiter (39) to limit the torque applied when the actuating member (33) is turned in a direction of rotation used to clamp the bar, **in that** the clamping element (15) is equipped with locking means (37) including a lock (45) operated by a removable key (46), **in that** the lock (45) is held in the actuating member (33) and **in that** the locking means (37) are designed to immobilize the actuating member (33) when the lock (45) is in the locked state.

2. Bar according to claim 1, **characterized in that** the torque limiter (39) is configured to disengage the second threaded element (29) from the actuating member (33) and/or to prevent the actuating member (33) from turning if the applied torque for clamping the bar is at least equal to a limit.

3. Bar according to claim 2, **characterized in that** the torque limiter (39) is formed in such a way that it can transmit torques that exceed the limit if the actuating member (33) is turned in a direction of rotation used to unclamp the bar.

4. Bar according to claim 2 or 3, **characterized in that** the torque limiter (33) has a driving member that can move about an axis (31, 132) and is connected in a substantially torsion-resistant manner to the actuating member (33), an output member (41) that can move about the axis (31, 132) and is connected or can be connected in a substantially torsion-resistant manner to the second threaded element (29), and spring means that press the driving member and the output member (41) against one another, **in that** the driving member and the output member (41) are provided with sets of teeth (33b, 41g) that are formed in such a way that they engage if the torque is below the limit and that they are separated at least temporarily if the torque reaches or exceeds the limit while the bar is being clamped.

5. Bar according to claim 4, **characterized in that** the sets of teeth (33d, 41g) have teeth (33e) projecting in an axial direction from one tooth set (33d, 41g) toward the other set of teeth (33d, 41g) and **in that** each tooth (33e) of the driving member has a front flank (33f) and a rear flank (33g) with respect to the direction in which it moves when the bar is being clamped, **in that** the front flanks (33f) are inclined with respect to the axis (31, 132) in such a way that they diverge from the previous tooth (33e) towards a respective crest of the tooth (33e) and **in that** the rear flanks (33g) are substantially parallel to the axis (31, 132).

6. Bar according to claim 4 or 5, **characterized in that** the actuating member (33) and the driving member are one and the same piece.

7. Bar according to any one of claims 1 to 6, **characterized in that** the actuating member (33) is connected captively to the clamping element (15) and shaped and sized in such a way that the actuating member (33) can be turned by hand without the need for a tool.

8. Bar according to any one of claims 1 to 7, **characterized in that** the clamping element (15) comprises a support (21), **in that** the locking means (37) are shaped to allow the lock (45) to be placed in the locked state and to then prevent the actuating member (33) from being turned with respect to the support (21) when the actuating member (33) is connected to the second threaded element (29) by the torque limiter (39).

9. Bar according to any one of claims 1 to 8, **characterized in that** the clamping element (15) comprises a support (21) with a stock (22) that has a tubular section (22a) and a leg (22d) intended to bear on the roof (3), **in that** the tubular section (22a) of the stock (22) has an axial hole (22b) that passes through the entire tubular section (22a) and is aligned with the central and/or main sector (8), **in that** the second threaded element (29) and a shank (33b) of the actuating member (33) are held in a tubular section (22a) and **in that** the locking means (37) are shaped to prevent the actuating member (33) from turning with respect to the tubular section (22a) when the lock (45) is in the locked state.

10. Bar according to claim 9, **characterized in that** the clamping element (15) comprises a stop ring (49) fixed immovably in the tubular section (22a) and which has two incisions (49a), **in that** the shank (33b) of the actuating member (33) has a hole (33k) passing through the shank (33b) and oblong in the longitudinal direction of the shank (33b), **in that** the locking means (37) comprise a locking pin (47) that enters the hole (33k) in the shank (33b) and can be moved in the longitudinal direction of the shank (33b), and **in that** the lock (45) is shaped to press the locking pin (47) into the incisions (49a) in the stop ring (49) in the locked state.

11. Bar according to any one of claims 1 to 10, **characterized in that** the central and/or main sector (8) has two ends, **in that** the clamping element (15) is connected to one of the ends of the central and/or main sector (8), **in that** another clamping element (16) is connected to the other end of the central and/or main sector (8) and **in that** the two clamping elements (15, 16) are provided with hooks (24) configured to catch in ribs (3a) on the roof (3), the said other clamping element (16) preferably being connected immovably to the central and/or main sector (8).

12. Bar according to any one of claims 1 to 7, **characterized in that** two fixing devices (11) are present, each of which comprises a first clamping element (15) and a second clamping element (117), **in that** each of the clamping elements (15, 117) is connected movably to the central and/or main sector (8), **in that** the adjusting means (27) comprise two threaded elements (28, 29), an actuating member (33) and a torque limiter (39) for each of the fixing devices (11), and **in that** each of the clamping elements (15, 117) has a jaw (15a, 117a) for clamping the bar to a longitudinal bar (109) fixed to the roof (3).
